# EUROPEAN PATENT APPLICATION

(11) **EP 4 435 938 A1**
(43) Date of publication of application: **25.09.2024**
(21) Application number: 22911993.8
(22) Date of filing: 22.12.2022
(51) Int. Cl.: H01M 50/105, H01M 50/129

(54) **METHOD OF MANUFACTURING POUCH CASE FOR SECONDARY BATTERY**

(30) Priority: 23.12.2021 KR 20210186150
(71) Applicant: LG Energy Solution, Ltd., Seoul 07335 (KR)
(72) Inventor: HWANG, Ji Young, Daejeon 34122 (KR); SONG, Dae Woong, Daejeon 34122 (KR); KIM, Sang Hun, Daejeon 34122 (KR); CHOI, Yong Su, Daejeon 34122 (KR); YU, Hyung Kyun, Daejeon 34122 (KR)
(74) Representative: Plasseraud IP
(86) International application number: PCT/KR2022/021107
(87) International publication number: WO 2023/121360

(57) **Abstract**

The present invention relates to a method for manufacturing a pouch case for a secondary battery, the method comprising the steps of: (S1) preparing a pouch exterior for a secondary battery including a structure in which a substrate layer, a barrier layer, and a sealant layer are sequentially stacked; (S2) reducing a modulus of the sealant layer by 20-50%; and (S3) molding the pouch exterior for a secondary battery to form a cup part.

## Description

### TECHNICAL FIELD

### CROSS-REFERENCE TO RELATED APPLICATIONS

This application claims the benefit of Korean Patent Application No. 10-2021-0186150, filed on December 23, 2021, the disclosure of which is incorporated herein in its entirety by reference.

### TECHNICAL FIELD

The present invention relates to a method for manufacturing a pouch case for a secondary battery, and more specifically, a method for manufacturing a pouch case for a secondary battery, the method including a step of reducing a modulus of a sealant layer of a pouch exterior for a secondary battery before molding.

### BACKGROUND ART

In general, in order to manufacture a pouch case for a secondary battery, a pouch exterior for a secondary battery is pressed to a specific depth using a punch and molded. The shape of the pouch exterior for a secondary battery is deformed by a pressure caused by the punch and a cup part is formed. During the process, a pinhole or a crack may be formed on a barrier layer of the molded pouch exterior for a secondary battery, or wrinkles may be formed thereon, and a whitening phenomenon may occur in a sealant layer. The whitening phenomenon of the sealant layer is known as a phenomenon in which the surface of the sealant layer looks white due to fine cracks and microvoids generated by tensile stress when the pouch exterior for a secondary battery is molded.

Recently, in order to improve the performance of a secondary battery, there is a demand for a pouch case for a secondary battery having a deep molding depth and a large molding curve. However, when the pouch case for a secondary battery having a deep molding depth and a large molding curve is manufactured as described above, excessive tensile stress is applied to the sealant layer disposed inside the pouch case for a secondary battery, thereby intensifying the whitening phenomenon of the sealant layer. The whitening phenomenon of the sealant layer adversely affects the durability and insulation of the pouch case for a secondary battery and ultimately deteriorates the stability of a pouch-type secondary battery to be manufactured.

Therefore, there is a need for a method for manufacturing a pouch case for a secondary battery capable of reducing the degree of whitening of a sealant layer even under a molding condition having a deep molding depth and a large molding curve.

### DISCLOSURE OF THE INVENTION

### TECHNICAL PROBLEM

An aspect of the present invention provides a method for manufacturing a pouch case for a secondary battery capable of reducing the whitening of a sealant layer.

### TECHNICAL SOLUTION

According to an aspect of the present invention, there is provided a method for manufacturing a pouch case for a secondary battery, the method including the steps of: (S1) preparing a pouch exterior for a secondary battery including a structure in which a substrate layer, a barrier layer, and a sealant layer are sequentially stacked; (S2) reducing a modulus of the sealant layer by 20-50%; and (S3) molding the pouch exterior for a secondary battery to form a cup part.

### ADVANTAGEOUS EFFECTS

According to the present invention, the sealant layer of the pouch exterior for a secondary battery is heated before molding, thereby reducing the modulus of the sealant layer to a certain level, and thus it is possible to manufacture a pouch case for a secondary battery in which the degree of whitening of the sealant layer is improved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 schematically illustrates a cross-section of a pouch exterior for a secondary battery;
FIG. 2 schematically illustrates a cross-section of a molded pouch exterior for a secondary battery;
FIG. 3 is an enlarged view illustrating the inner surface of a cup part of the molded pouch exterior for a secondary battery illustrated in FIG. 2;
FIG. 4 is a plan view of the molded pouch exterior for a secondary battery;
FIG. 5 is a photograph of the inside of a sealant layer of Comparative Example 1 observed through an optical microscope;
FIG. 6 is a photograph of the surface of the sealant layer of Comparative Example 1 observed through an optical microscope;
FIG. 7 is a photograph of the inside of a sealant layer of Comparative Example 2 observed through an optical microscope;
FIG. 8 is a photograph of the surface of the sealant layer of Comparative Example 2 observed through an optical microscope;
FIG. 9 is a photograph of the inside of a sealant layer of Example 1 observed through an optical microscope;
FIG. 10 is a photograph of the surface of the sealant layer of Example 1 observed through an optical microscope;
FIG. 11 is a photograph of the inside of a sealant layer of Example 2 observed through an optical microscope;
FIG. 12 is a photograph of the surface of the sealant layer of Example 2 observed through an optical microscope;
FIG. 13 is a photograph of the inside of a sealant layer of Example 3 observed through an optical microscope;
FIG. 14 is a photograph of the surface of the sealant layer of Example 3 observed through an optical microscope;
FIG. 15 is a photograph of the inside of a sealant layer of Example 4 observed through an optical microscope; and
FIG. 16 is a photograph of the surface of the sealant layer of Example 4 observed through an optical microscope.

### MODE FOR CARRYING OUT THE INVENTION

Hereinafter, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Method for Manufacturing Pouch Case for Secondary Battery

The method for manufacturing a pouch case for a secondary battery according to the present invention includes the following steps (S1) to (S3):
(S1) preparing a pouch exterior for a secondary battery including a structure in which a substrate layer, a barrier layer, and a sealant layer are sequentially stacked;
(S2) reducing a modulus of the sealant layer by 20-50%; and
(S3) molding the pouch exterior for a secondary battery to form a cup part.

The inventors of the present invention have found that before forming a cup part by molding a pouch exterior for a secondary battery, the sealant layer of the pouch exterior for a secondary battery is heated to reduce the modulus of the sealant layer, thereby reducing the whitening phenomenon of the sealant layer after molding, and have completed the present invention. Here, the modulus means Young's modulus, and when the modulus of the sealant layer is reduced, the modulus of elasticity of the sealant layer may be reduced, thereby facilitating deformation.

Specifically, when the sealant layer of the pouch exterior for a secondary battery is heated before the cup part is formed by molding the pouch exterior for a secondary battery, the modulus of the sealant layer may be reduced by 20-50%, preferably by 25-48%. Accordingly, the deformation is facilitated by relieving tensile stress generated during the molding process, the whitening phenomenon of the sealant layer after molding is reduced, the durability of the sealant layer is significantly improved, and the durability of the pouch case for a secondary battery including the sealant layer may also be significantly improved.

Hereinafter, steps (S1) to (S3) will be described in detail with reference to the drawings. However, the present invention is not limited to configuration illustrated in the drawings.

First, a pouch exterior for a secondary battery including a structure in which a substrate layer, a barrier layer, and a sealant layer are sequentially stacked is prepared (S1) .

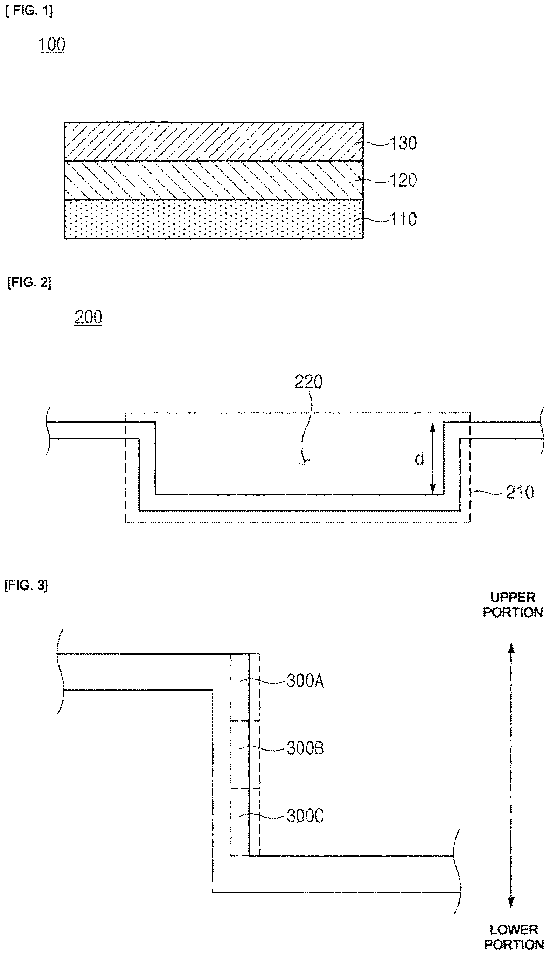

FIG. 1 schematically illustrates a cross-section of a pouch exterior for a secondary battery.

Referring to FIG. 1, a pouch exterior 100 for a secondary battery includes a structure in which a substrate layer 110, a barrier layer 120, and a sealant layer 130 are sequentially stacked.

The substrate layer 110 may be disposed at the outermost side of the pouch case for a secondary battery, and serve to protect the barrier layer 120, the sealant layer 130, and an electrode assembly (not shown) and an electrolyte (not shown) disposed inside the pouch case for a secondary battery from external materials, air, moisture, or the like.

The substrate layer 110 may include at least one selected from the group consisting of polyethylene, polypropylene, polyethylene terephthalate, and nylon. The substrate layer 110 includes the material, and thus can effectively protect the barrier layer 120, the sealant layer 130, the electrode assembly, and the electrolyte from external materials, air, moisture, or the like.

Although not shown in the drawings, the substrate layer 110 may include two or more layers, and specifically, the substrate layer 110 may include a first layer (not shown) and a second layer (not shown). The substrate layer 110 includes two or more layers, and thus can more effectively protect the barrier layer 120, the sealant layer 130, the electrode assembly, the electrolyte, and the like from external materials, air, moisture, or the like.

In addition, when the substrate layer 110 includes the first layer and the second layer, the first layer may include nylon, and the second layer may include polyethylene terephthalate. Since the first layer includes nylon, insulating properties between the barrier layer 120 and the second layer may be further secured, and since the second layer includes polyethylene terephthalate, foreign substances introduced from the outside of the pouch case for a secondary battery may be effectively blocked.

The substrate layer 110 may have a thickness of 10-50 µm, specifically 15-45 um, and more specifically 18-35 um. When the thickness of the substrate layer 110 satisfies the above numerical range, the substrate layer 110 may not be damaged, and may have excellent insulating properties even when the sealant layer is sufficiently heated in step (S2) as described later.

The barrier layer 120 may serve to block the introduction of external materials, air, moisture, or the like into the pouch case for a secondary battery.

The barrier layer 120 may include metal materials, and specifically, the barrier layer 120 may be an aluminum (Al) alloy. Since the barrier layer 120 includes an aluminum alloy, the introduction of external materials, air, moisture, or the like into the pouch case for a secondary battery may be effectively blocked.

The barrier layer 120 may have a thickness of 20-80 µm, specifically, 25-65 µm, and more specifically, 30-60 um. When the thickness of the barrier layer 120 satisfies the above numerical range, the barrier layer 120 may not be damaged and may have excellent insulating properties even when the sealant layer 130 is sufficiently heated in step (S2) as described later.

The sealant layer 130 may be disposed on the innermost side of the pouch case for a secondary battery, and serve to protect an electrode assembly, an electrolyte, or the like. In addition, the sealant layer 130 may be fused to each other by heat and serve to seal the inside of the pouch case for a secondary battery. As a specific example, when the pouch case for a secondary battery is bisected and folded to contact each other, the sealant layer 130 may be in contact with each other inside, and when heat is applied in the state, the the sealant layer 130 may be fused to each other by heat. Accordingly, the inside of the pouch case for a secondary battery may be sealed.

The sealant layer 130 may include at least one selected from the group consisting of polyethylene, polypropylene, an ethylene propylene copolymer, a polypropylene-butylene-ethylene terpolymer, a polyethylene-acrylic acid copolymer, and a polypropylene-acrylic acid copolymer, and preferably, the sealant layer 130 may include polypropylene. Since the sealant layer 130 includes the above-described materials, the the sealant layer 130 may be effectively fused to each other by heat, and the electrode assembly, the electrolyte, and the like disposed in the pouch case for a secondary battery may be effectively protected.

The sealant layer 130 may have a thickness of 60-100 µm, specifically 65-95 µm, and more specifically 70-90 um. When the thickness of the sealant layer 130 satisfies the above numerical range, even when the sealant layer 130 is heated in step (S2) as described later, the sealant layer 130 is not easily melted and sufficient heat energy is supplied so that the modulus of the sealant layer 130 may be effectively reduced.

Meanwhile, although not illustrated in the drawings, the substrate layer 110 may include an adhesive layer (not shown). The adhesive layer may be adhered between each layer to improve bonding strength. Accordingly, it is possible to effectively prevent the substrate layer 110 from being separated from the pouch case 100 for a secondary battery.

Thereafter, the sealant layer 130 of the pouch exterior 100 for a secondary battery is heated to reduce the modulus of the sealant layer 130 by 20-50% (S2).

Specifically, when the sealant layer 130 of the pouch exterior 100 for a secondary battery is heated, the modulus of the material included in the sealant layer 130 may be reduced by heat, thereby relieving stress due to molding.

In particular, when the sealant layer 130 is heated before the pouch exterior 100 for a secondary battery is molded, the modulus of the sealant layer 130 may be reduced by 20-50%, preferably by 25-48%, and more preferably by 30-48% by the transferred heat energy. When the pouch exterior 100 for a secondary battery is molded in the state in which the modulus of the sealant layer 130 is reduced as described above, the occurrence of defects such as cracks is reduced, and thus, a whitening phenomenon is reduced in the sealant layer 130 of the pouch exterior for a secondary battery to be manufactured, thereby improving mechanical strength of the sealant layer 130 and/or the pouch exterior 100 for a secondary battery.

In addition, when the sealant layer 130 is heated before the pouch exterior 100 for a secondary battery is molded, the friction coefficient of the surface of the sealant layer 130 may be changed by the transferred heat energy. The surface of the sealant layer 130 may have a friction coefficient of 0.13 to 0.30, preferably 0.15 to 0.25, and more preferably, 0.18 to 0.25. When the numerical range is satisfied, slip characteristics of the sealant layer 130 may be appropriately improved, and thus the occurrence of defects such as cracks may be reduced, and the whitening phenomenon may be reduced even though the sealant layer 130 is physically deformed during the molding.

When the sealant layer 130 of the pouch exterior 100 for a secondary battery is heated, the surface temperature of the sealant layer 130 may be 35-75 °C, and preferably 40-70 °C. When the surface temperature of the sealant layer 130 satisfies the numerical range, the modulus of the sealant layer 130 may be effectively reduced. When the surface temperature of the sealant layer 130 is too high, the sealant layer 130 may be melted and deformed, and when the surface temperature of the sealant layer 130 is too low, energy is not sufficiently transferred to the sealant layer 130, such that the modulus of the sealant layer 130 is not sufficiently reduced.

A method of heating may be, for example, emitting infrared rays to the sealant layer 130 or conducting heat to the sealant layer 130 using a heating block. The method of emitting the infrared rays has the advantage that heat can be uniformly applied.

The wavelength of infrared rays may be 1-100 µm, and the emitting time of infrared rays may be 2-18 seconds. Preferably, the wavelength of infrared rays may be 2.5-50 µm, and the emitting time of infrared rays may be 3-18 seconds. When the emitting time of infrared rays satisfies the numerical range, the cracks present inside the sealant layer 130 may be reduced and completely removed while the sealant layer 130 is not melted.

In addition, the emitting time of infrared rays may be more preferably 5-17 seconds. If the emitting time of infrared rays is too long, the lubricant contained inside the sealant layer 130 moves to the surface of the sealant layer 130, and accordingly, the friction coefficient of the surface is increased, and thus the whitening phenomenon may occur again on the surface of the sealant layer 130 after molding. Therefore, it is important not to lengthen the emitting time of infrared rays so that the lubricant does not excessively move to the surface of the sealant layer 130, and it is preferable that the emitting time of infrared rays does not exceed 20 seconds.

The region to which infrared rays are emitted may be the entire region of the sealant layer 130 in the pouch exterior 100 for a secondary battery, and in this case, the modulus may be uniformly reduced in the entire region of the sealant layer 130.

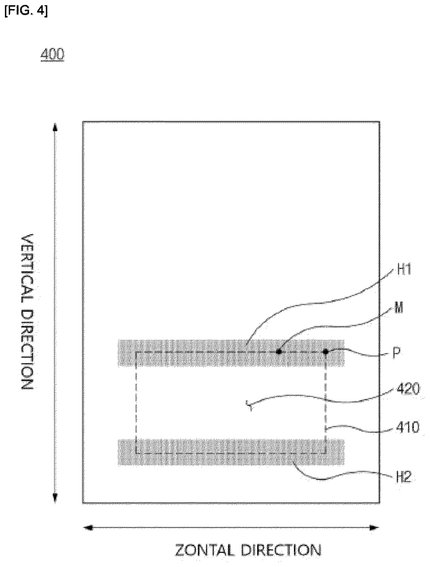

In addition, in an embodiment, the region to which infrared rays are emitted may be a partial region of the sealant layer 130 in the pouch exterior 100 for a secondary battery, and specifically, may be a region corresponding to the edge of a cup part extending in the horizontal direction in the sealant layer 130. Since the region corresponding to the edge of the cup part extending in the horizontal direction in the sealant layer 130 is stretched in the vertical direction during the molding, cracks may be more easily formed than other parts, and thus the formation of cracks after the molding may be effectively reduced by reducing the modulus by heating before the molding. FIG. 4 exemplarily illustrates regions H1 and H2 to which infrared rays are emitted.

Thereafter, the pouch exterior for a secondary battery is molded to form a cup part (S3).

When the pouch exterior 100 for a secondary battery is prepared, both ends of the pouch exterior for a secondary battery are fixed using a stripper and a die. While both ends of the pouch exterior for a secondary battery are fixed, the pouch exterior 100 for a secondary battery disposed between both ends is pressurized and molded through a punch.

The speed of molding the pouch exterior 100 for a secondary battery may be 1-100 mm/sec, and specifically, 5-50 mm/sec. When the molding speed satisfies the numerical range above, the pressure applied to the sealant layer 130 per time is adjusted to an appropriate level, so that the amount of cracks generated in the sealant layer 130 by the molding may be reduced and the whitening phenomenon may be reduced.

In addition, the speed of molding the pouch exterior for a secondary battery may be preferably 10-30 mm/sec, and more preferably 12-25 mm/sec. Since the modulus of the sealant layer 130 is reduced by 20-50% by heating the sealant layer 130 in step (S2) before forming the cup part by molding the pouch exterior for a secondary battery, even though the molding speed is set as the numerical range above, the whitening phenomenon of the sealant layer 130 of the manufactured pouch case for a secondary battery may be reduced, thereby improving the durability, and the overall process time of the pouch case for a secondary battery may be shortened compared to the conventional method, and the manufacturing yield of the pouch case for a secondary battery may increase.

When the molding of the pouch exterior for a secondary battery is completed and the pressed punch is removed, a cup part may be formed between both ends of the pouch exterior for a secondary battery. The cup part may include an accommodation space capable of accommodating an electrode assembly and the like therein.

FIG. 2 schematically illustrates a cross-section of the molded pouch exterior for a secondary battery.

Referring to FIG. 2, the molded pouch exterior 200 for a secondary battery may include a cup part 210 and an accommodation space 220 partitioned by the cup part 210. The cup part 210 may be formed by being pressurized by a punch as described above.

The cup part 210 may have a concave shape including the accommodation space therein, but is not necessarily limited thereto, and the cup part 210 may be adjusted in various shapes by changing the shape of the punch as necessary.

The depth d of the cup part 210 may be 4-10 mm, specifically 5-9 mm, and more specifically 5.5-8 mm. The depth d of the cup part 210 may be appropriately adjusted according to the contents accommodated, and even if the depth d of the cup part 210 is formed to be somewhat deep, as described above, the sealant layer 130 is heated before the molding, and thus the whitening phenomenon of the sealant layer 130 after the molding may be reduced, and the durability of the manufactured pouch case for a secondary battery may be improved.

FIG. 3 is an enlarged view illustrating the inner surface of the cup part of the molded pouch exterior for a secondary battery illustrated in FIG. 2.

Referring to FIGS. 1 to 3, the inner surface of the cup part 210 includes a first region 300A, a second region 300B, and a third region 300C. In addition, the first region 300A, the second region 300B, and the third region 300C may be parts of the sealant layer 130, respectively.

Specifically, the first region 300A represents an upper portion of the inner surface of the cup part 210, the second region 300B represents a central portion of the inner surface of the cup part 210, and the third region 300C represents a lower portion of the inner surface of the cup part 210.

Specifically, the first region 300A may be a region from the uppermost end of the cup part 210 to 0.2-0.3 d with respect to the depth d of the cup part 210, the second region 300B may be a region from the end point of the first region 300A to 0.4-0.5 d, and the third region 300C may be a region from the end point of the second region 300B to 0.2-0.3 d.

The first region 300A is a region in which the cup part 210 starts to be formed, and is a region in which a bending is generated by a punch in step (S2). The first region 300A may be a region in which a plurality of defects such as cracks are generated, and the degree of whitening may be severe, and the mechanical strength may be low.

The second region 300B is a central portion of the inner surface of the cup part 210 and is a region in which no bending is generated, and the third region 300C is a lower portion of the inner surface of the cup 210 and is a region in which no bending is generated. Since the second region 300B and the third region 300C are less deformed by molding than the first region 300A, defects such as cracks are not generated. Accordingly, the degree of whitening of the second region 300B and the third region 300C may be low, and the mechanical strength may be somewhat high.

Meanwhile, the first region 300A is a region in which a plurality of defects such as cracks are expected to be generated due to a large degree of deformation by molding as described above, and the degree of cracks of the first region 300A may be checked to determine whether there are the defect of the sealant layer 130 and the defect of the pouch case for a secondary battery.

Hereinafter, examples of the present invention will be described in detail. However, the present invention is not limited to the following examples.

### Example 1

Step (S1): Preparing a pouch exterior for a secondary battery including a structure in which a substrate layer, a barrier layer, and a sealant layer are sequentially stacked

Prepared was a pouch exterior for a secondary battery including a structure in which a 15 um-thick nylon layer as a first layer of the substrate layer, a 12 µm-thick polyethylene terephthalate layer as a second layer of the substrate layer, a 40 µm-thick aluminum alloy layer as the barrier layer, and an 80 µm-thick polypropylene layer as the sealant layer were stacked. The adhesive layers were disposed between the first layer and the second layer, and between the barrier layer and the first layer, respectively.

Step (S2): Reducing the modulus of the sealant layer

The sealant layer of the pouch exterior for a secondary battery was heated to reduce the modulus of the sealant layer. A method for emitting infrared rays to the sealant layer using an infrared lamp was used in the Example.

The pouch exterior for a secondary battery was placed, and the infrared lamp was placed at a position spaced 5 cm from the pouch exterior. The wavelength of the infrared lamp was set to 2.5-50 µm, and the output of the infrared lamp was set to 200 W.

The infrared lamp was used to emit infrared rays to regions corresponding to the upper and lower portions (the regions indicated by H1 and H2 in FIG. 4) of the edge of the cup part extending in the horizontal direction of the sealant layer. The emitting time of the infrared rays was 4 seconds, and the infrared rays were emitted so that the surface temperature of the sealant layer reached about 40 °C.

Step (S3): Molding the pouch exterior for a secondary battery to form a cup part.

After the pouch exterior for a secondary battery was placed so that the substrate layer was placed at a lower portion of a molding apparatus and the sealant layer was placed at an upper portion thereof, both ends of the pouch exterior for a secondary battery were fixed using a stripper and a die, and the pouch exterior for a secondary battery was molded using a punch to form a cup part. In this case, the molding speed was 15 mm/sec, and the molding depth was 5.7 mm.

### Example 2

A pouch case for a secondary battery was manufactured in the same manner as in Example 1, except that in step (S2) above, the emitting time of the infrared rays using the infrared lamp was 8 seconds and the infrared rays were emitted so that the surface temperature of the sealant layer reached about 50 °C.

### Example 3

A pouch case for a secondary battery was manufactured in the same manner as in Example 1, except that in step (S2) above, the emitting time of the infrared rays using the infrared lamp was 12 seconds and the infrared rays were emitted so that the surface temperature of the sealant layer reached about 60 °C.

### Example 4

A pouch case for a secondary battery was manufactured in the same manner as in Example 1, except that in step (S2) above, the emitting time of the infrared rays using the infrared lamp was 16 seconds and the infrared rays were emitted so that the surface temperature of the sealant layer reached about 70 °C.

### Comparative Example 1

A pouch case for a secondary battery was manufactured in the same manner as in Example 1, except that in step (S2) above, the infrared rays were not emitted using the infrared lamp.

### Comparative Example 2

A pouch case for a secondary battery was manufactured in the same manner as in Example 1, except that in step (S2) above, the emitting time of the infrared rays using the infrared lamp was 20 seconds and the infrared rays were emitted so that the surface temperature of the sealant layer reached about 80 °C.

### Experimental Example - Evaluation of Modulus and Crack level of Sealant Layer

The modulus of each of the sealant layers of the pouch exteriors for a secondary battery of Examples 1 to 4 and Comparative Examples 1 to 2 was measured, and the crack level was evaluated as follows.

### <Method for Measuring Modulus and Friction Coefficient of Sealant Layer>

After the sealant layer of the pouch exterior for a secondary battery was cut into a length of 100 mm and a width of 15 mm, the Young's modulus of the sealant layer of the pouch exterior for a secondary battery was measured using a Universal Testing Machine (UTM) capable of setting a temperature in a chamber. After the temperatures of the chamber were set to 25 °C, 40 °C, 50 °C, 60 °C, 70 °C, and 80 °C, respectively, the Young's modulus of the sealant layer was measured under each temperature condition, and the degree of modulus reduction of the sealant layer was calculated and shown in Table 1 below. In addition, the surface friction coefficient of the sealant layer under each temperature condition was measured using a friction coefficient measuring device (FP-2260 model from Thwing-Albert Instrument Company), and the values are shown in Table 1 below.

### <Crack Level Evaluation Method>

FIG. 4 is a plan view of the molded pouch exterior for a secondary battery. A portion (M) which is spaced about 2 cm in the horizontal direction from one apex of a cup part 410 of each pouch exterior 400 for a secondary battery and corresponds to an upper portion of the inner surface of the cup part 410 was cut into 3 cm x 2.5 cm to be prepared as a specimen. After the specimen was attached onto the slide glass, the cracks were observed through an optical microscope.

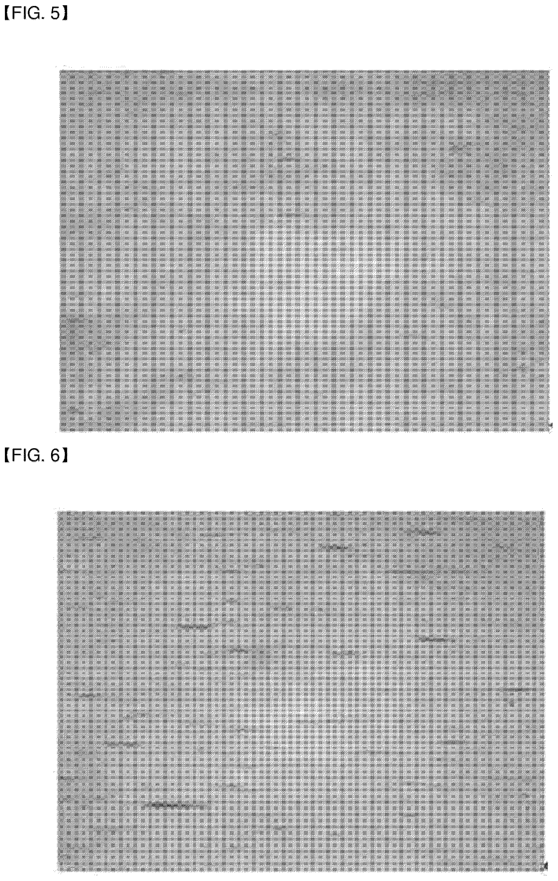

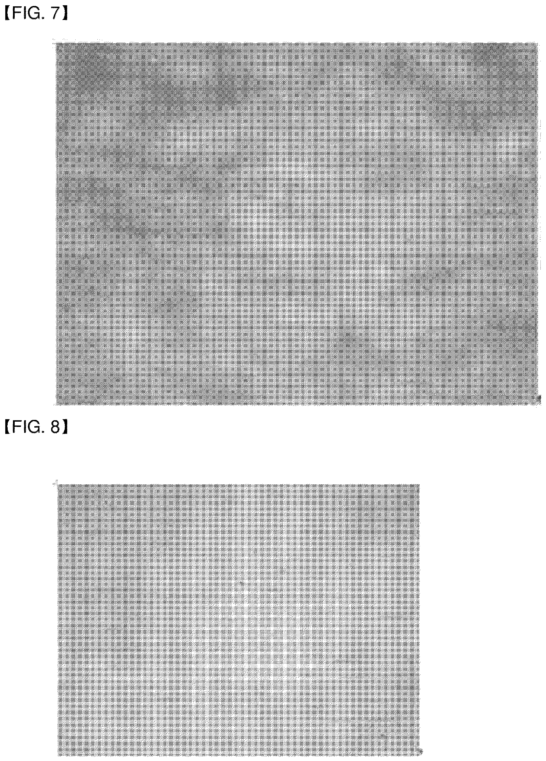

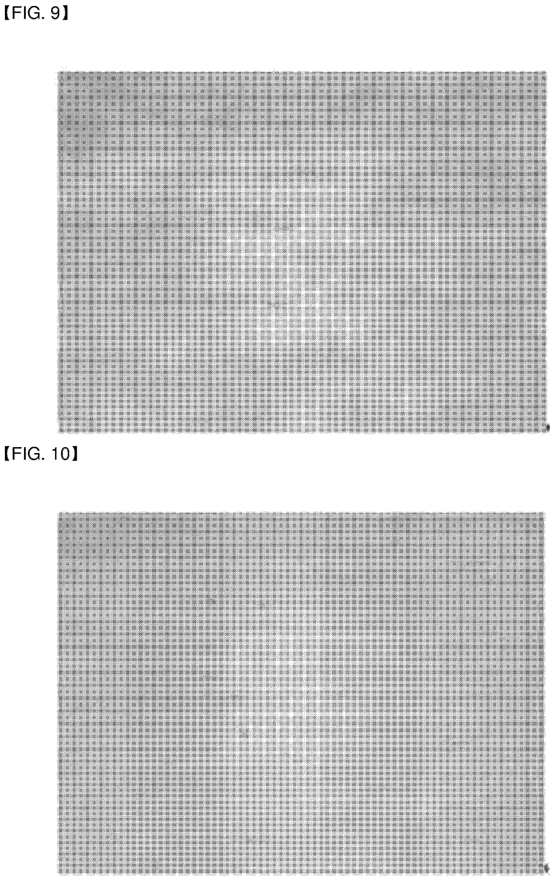

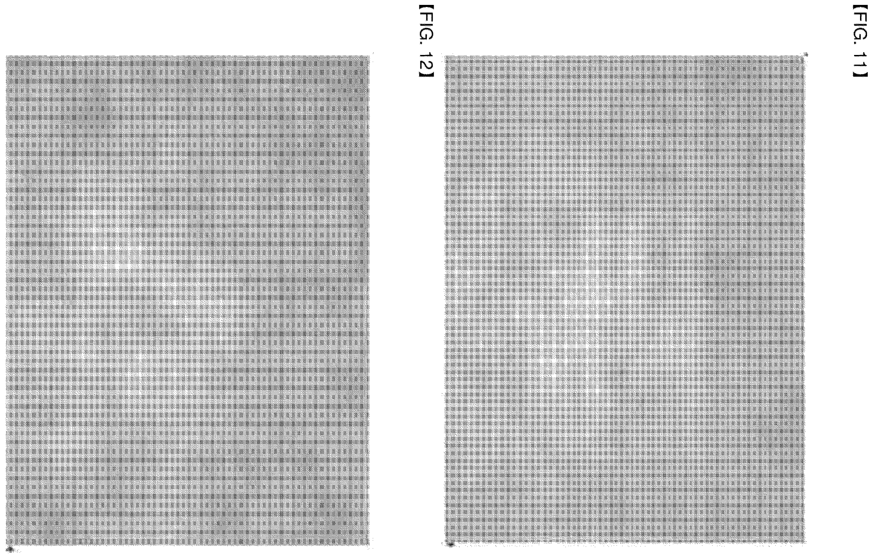

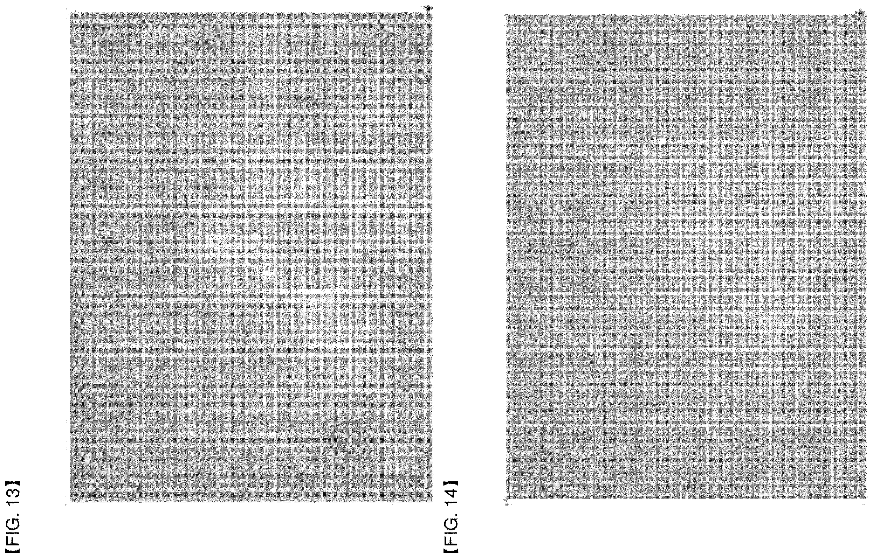

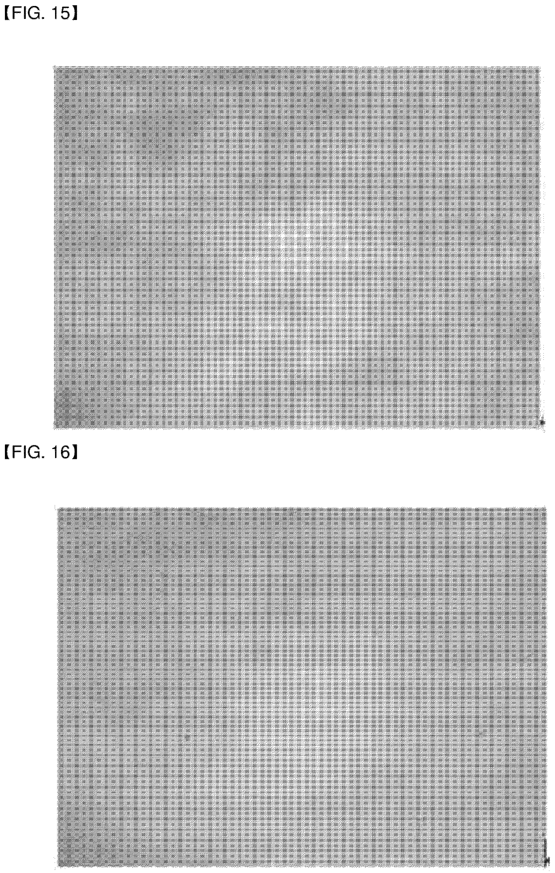

Optical micrographs of Examples 1 to 4 and Comparative Examples 1 to 2 are shown in FIGS. 5 to 16, and the experimental results are summarized in Table 1 below.

**[Table 1]**

| | Comparati ve Example 1 | Comparati ve Example 2 | Example 1 | Example 2 | Example 3 | Example 4 |
|---|---|---|---|---|---|---|
| Emitting time of infrared rays after molding (unit: seconds) | 0 | 20 | 4 | 8 | 12 | 16 |
| Surface temperatu re of sealant layer when infrared rays are emitted | - | 80 °C | 40 °C | 50 °C | 60 °C | 70 °C |
| Degree of modulus reduction of sealant layer | No change | 55% reduction | 25% reduction | 32% reduction | 400 reduction | 48% reduction |
| Surface friction coefficie nt of sealant layer | 0.12 | 0.38 | 0.15 | 0.2 | 0.2 | 0.22 |
| Crack level inside sealant layer | 2 | 3 | 1 | 1 | 0 | 0 |
| Crack level of surface of sealant layer | 4 | 2 | 2 | 1 | 1 | 0 |

In Table 1 above, the crack level inside the sealant layer and the crack level on the surface of the sealant layer are expressed as 0 to 5 by checking, with the naked eye, the degree of the cracks through the photographs observed by the optical microscope. Going from 0 to 5 means that there are more cracks.

As a result of the experiment, in the case of Comparative Example 1, since the infrared rays were not emitted before the molding of the pouch exterior for a secondary battery, the modulus of the sealant layer was not reduced. Accordingly, it was confirmed that when the pouch exterior for a secondary battery was molded, stress due to the molding was not relieved, and thus a plurality of cracks are generated in the sealant layer.

In the case of Comparative Example 2, the infrared rays were emitted before the molding of the pouch exterior for a secondary battery, but the infrared rays were emitted for 20 seconds using the infrared lamp so that most of the lubricant present inside the sealant layer moved to the surface of the sealant layer, and the surface friction coefficient was increased and the whitening phenomenon of the sealant layer appeared again after the molding.

In the case of Examples 1 to 4, it was confirmed that the emitting times of the infrared rays before the molding were appropriately set to reduce the modulus of the sealant layer, thereby reducing the whitening phenomenon of the sealant layer after the molding, and particularly, in the cases of Examples 3 and 4, it was confirmed that the emitting times of the infrared rays were set to 12 seconds and 16 seconds, respectively, to reduce the modulus of the sealant layer by 40% and 48%, respectively, and the whitening level of the sealant layer after the molding was very good.

### (Description of the Symbols)

100: Pouch exterior for a secondary battery
110: Substrate layer
120: Barrier layer
130: Sealant layer
200: Pouch exterior for a secondary battery
210: Cup part
220: Accommodation space
300A: First region
300B: Second region
300C Third region
400: Pouch exterior for a secondary battery
410: Cup part
420: Accommodation space
M: Measurement site
P: Apex

## Claims

1. A method for manufacturing a pouch case for a secondary battery, the method comprising the steps of:
(S1) preparing a pouch exterior for the secondary battery comprising a structure in which a substrate layer, a barrier layer, and a sealant layer are sequentially stacked;
(S2) reducing a modulus of the sealant layer by 20-50%; and
(S3) molding the pouch exterior for the secondary battery to form a cup part.

2. The method of claim 1, wherein in the step (S2), the sealant layer is heated to reduce the modulus of the sealant layer.

3. The method of claim 2, wherein in the step (S2), the sealant layer is heated so that a surface temperature of the sealant layer is 35-75 °C.

4. The method of claim 2, wherein in the step (S2), the sealant layer is heated by emitting infrared rays to the sealant layer.

5. The method of claim 4, wherein the infrared rays have a wavelength of 1-100 µm, and an emitting time of the infrared rays is 3-18 seconds.

6. The method of claim 1, wherein in the step (S3), a depth of the cup part is 4-10 mm.

7. The method of claim 1, wherein in the step (S3), a speed of molding the pouch exterior for a secondary battery is 1-100 mm/sec.

8. The method of claim 1, wherein the sealant layer comprises at least one selected from the group consisting of polyethylene, polypropylene, an ethylene propylene copolymer, a polypropylene-butylene-ethylene terpolymer, a polyethylene-acrylic acid copolymer, and a polypropylene-acrylic acid copolymer.

9. The method of claim 1, wherein the sealant layer has a thickness of 60-100 µm.

10. The method of claim 1, wherein the barrier layer comprises an aluminum alloy.

11. The method of claim 1, wherein the barrier layer has a thickness of 20-80 µm.

12. The method of claim 1, wherein the substrate layer comprises at least one selected from the group consisting of polyethylene, polypropylene, polyethylene terephthalate, and nylon.
